Europäisches Patentamt

European Patent Office

Office européen des brevets

(11) Publication number: **0 199 819**

**A1**

# EUROPEAN PATENT APPLICATION

published in accordance with Art. 158(3) EPC

(21) Application number: **85905103.9**

(22) Date of filing: **09.10.85**

Data of the international application taken as a basis:

(86) International application number:
**PCT/JP85/00558**

(87) International publication number:
**WO86/02471 (24.04.86 86/09)**

(51) Int. Cl.⁴: **G 05 D 16/06**

(30) Priority: **09.10.84 JP 152914/84 U**

(43) Date of publication of application:
**05.11.86 Bulletin 86/45**

(84) Designated Contracting States:
**DE FR GB**

(71) Applicant: **MIYAWAKI INCORPORATED**
**1-30, Tagawa-Kita 2-Chome**
**Yodogawa-ku Osaka(JP)**

(72) Inventor: **NOGUCHI, Keiichi Miyawaki Steam Trap**
**Mfg.Co.,Ltd.**
**1-30, Tagawa-kita 2-chome Yodogawa-ku**
**Osaka-shi Osasaka 532(JP)**

(74) Representative: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) **DIRECT-ACTING REDUCING VALVE.**

(57) A direct-acting reducing valve adapted to reduce the pressure of a fluid, which flows from a high-pressure supply source, to a required level, and continue the supply of the fluid of the required pressure level even when the consumption of the fluid varies. This reducing valve includes pressure-sensitive driving means (12; 13, 14, 15) for operating a valve element (6) in response to the secondary pressure of the fluid, and has a pressure-introducing flow passage (29) for applying a static component alone of the secondary pressure to the driving means. This enables the control of the tendency of secondary pressure reduction, which is caused by an increase in the consumption flow rate of the fluid.

*FIG.1*

PCT/JP85/00558

TITLE MODIFIED
see front page

# DIRECT-OPERATIVE REDUCING VALVE

## Technical Field

The present invention relates to a direct-operative reducing valve which is used to reduce to a required level the pressure of steam, air, or the like fluid supplied from a high-pressure supply source, and to continue the supply of the fluid while constantly maintaining the pressure at the required level.

## Background Art

Generally, a direct-operative reducing valve includes a valve casing with inlet and outlet chambers defined therein, a valve element arranged within the valve casing and adapted to open or close a valve opening formed in a partition wall that isolates the two chambers from each other, and a controller mounted on the valve casing and adapted to control the operation of the valve element in response to the discharge pressure of the fluid flowing through the reducing valve. Japanese Patent Application Laid-open Publication No. 58-29,020 discloses such a reducing valve wherein the controller has a bellows as a pressure-responsive actuating means such that the discharge pressure of the fluid is applied to the inside of a pressure chamber defined by the bellows. The output end of the bellows is operably connected with the valve element through

0199819

an actuating stem which extends through the valve casing. There is furhter provided an orifice plate with an orifice which brings the pressure chamber within the bellows into communication with the outlet chamber of the valve casing, the orifice plate being further formed with a guide bore for guiding the lifting motion of the actuating stem.

With the above-mentioned arrangement of the direct-operative reducing valve, the secondary pressure, i.e. the pressure of the fluid flowing into the outlet chamber, supplied from the inlet chamber and through the valve opening, is introduced via the orifice in the orifice plate into the pressure chamber within the bellows acting as the controller for the valve element. The output end of the bellows is thus moved to an equillibrium position in which a force, which corresponds to the product of the secondary pressure of the fluid and the effective pressure receiving area of the pressure chamber, is ballanced with a resilient biasing force applied to the bellows in the opposite direction, such that the valve element is actuated in response to the secondary pressure of the fluid to determine the opening degree of the valve. In this instance, the increased consumption demand of the fluid supplied from the pressure reducing valve results in the decreased secondary pressure whereby the valve opening degree becomes greater to increase the fluid flow rate. Conversely, the decreased consumption demand of the fluid results in the increased secondary pressure whereby the valve opening degree becomes smaller to decrease the fluid flow rate. In this way, a control function is performed to maintain a predetemined supply pressure of the fluid which, by itself, can be adjusted by varying the resilient biasing force applied to the bellows.

When compared with a so-called pilot-operated reducing valve, the direct-operative pressure reducing valve is simple in construction, relatively free from mechanical failures, and effective in minimizing the leakage of the fluid. On the other hand, however, the direct-operative pressure reducing valve suffers from disadvantage in that the rated flow capacity has to be set at a relatively low level because of gradually increased offset, i.e. the difference between the predetermined pressure and the actual secondary pressure, which arises as the fluid flow rate is gradually increased from an adjustable minimum value to the rated value.

Disclosure of the Invention

Accordingly, it is an object of the present invention to provide an improved direct-operative reducing valve which, while preserving the advantages of the above-mentioned prior art structure, makes it possible to suppress the tendency of the incremental offset resulting from the increased consumption demand of the fluid.

0199819

To attain such an object, the present invention provides a direct-operative reducing valve, comprising: a valve casing in which an inlet chamber and an outlet chamber for a fluid are defined, a partition wall being arranged in the valve casing to isolate said inlet chamber and outlet chamber from each other, said partition wall having a valve seat formed with a valve opening which extends from one side to the other of the partition wall; a valve element arranged within the valve casing in opposition to, and resiliently urged toward, the valve seat; and a controller mounted on said valve casing and adapted to control the operation of said valve element in response to the outlet pressure of said fluid, said controller including a pressure-responsive actuating means defining a pressure chamber to which the outlet pressure of said fluid is to be applied, an actuating stem arranged coaxially with said valve opening and extending through an outer wall of said valve casing, for operably connecting said valve element with said pressure-responsive actuating means, and a guide member provided on said outer wall of said valve casing, for guiding the axial sliding movement of said actuating stem, wherein said guide member is formed with a pressure-conducting passage which communicates said pressure chamber of said pressure-response actuating means with said outlet chamber, and which is adapted to conduct substantially exclusively the static component of the pressure of the fluid within said outlet chamber to said pressure chamber.

The present invention is based on a recognition obtained by reviewing the dominant factor whereby the offset of the secondary pressure from the predetermined pressure occurs in the above-mentioned prior art, that such an offset is dependent upon variation of the fluid flow rate, and this dependency arises from an additional influence to the pressure chamber, of the flow speed variation as variation in the dynamic component of the secondary pressure corresponding to the flow rate variation of the fluid.

According to the present invention, the pressure chamber is communicated with the outlet chamber of the valve casing through the pressure-conducting passage which introduces into the pressure chamber substantially exclusively the static component of the secondary pressure. Thus, it becomes possible to eliminate adverse influences arising from the dynamic pressure variation, and to markedly suppress the tendency of the incremental offset.

Brief Description of the Drawings

Fig. 1 is a longitudinal-sectional view of a direct-operative reducing valve according to one embodiment of the present invention;

Figs. 2a and 2b are plan view and sectional view taken along line A-A, respectively, of a retainer ring for securing a guide member to the valve casing of the reducing valve shown in Fig. 1;

Fig. 3 is a longitudinal-sectional view of the guide member in the reducing valve shown in Fig. 1;

Figs. 4a, 4b and 4c are front view, bottom view and side view, respectively, of the guide member shown in Fig. 3; and

Fig. 5 is a graph showing the suppressed flow-rate dependent characteristic of the secondary pressure in the reducing valve of the present invention.

Best Mode of Carrying Out the Invention

The present invention will now be explained more in detail, by referring to one embodiment shown in the drawings.

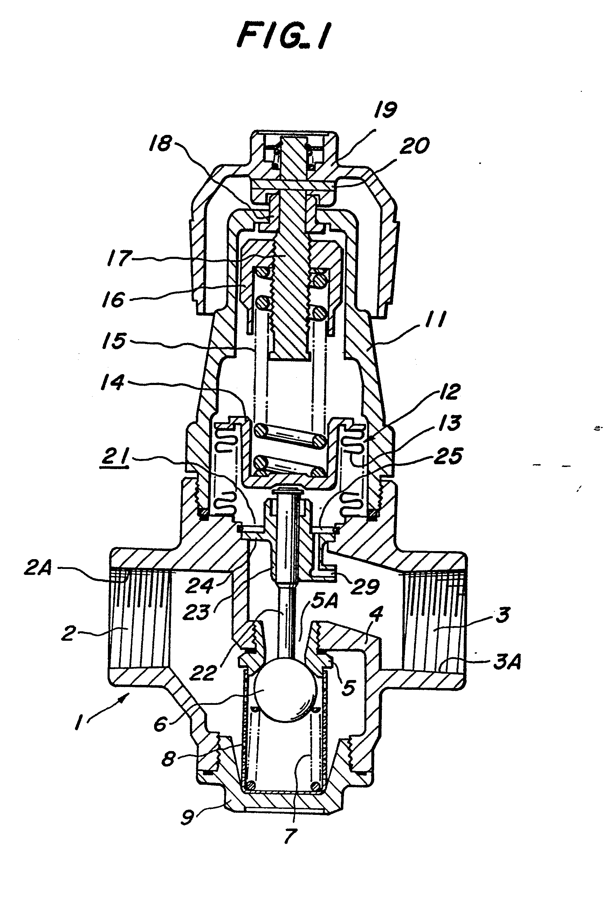

The direct-operative reducing valve shown in Fig. 1 comprises a valve casing 1 which defines therein an inlet chamber 2 and an outlet chamber 3 for the fluid. Connecting screw threads 2A, 3A on the inlet and outlet sides, with which the pressure reducing valve is to be connected with fluid supply pipe lines, are each arranged coaxially with the other. Within the valve casing 1, there is arranged a partition wall 4 for isolating the inlet chamber 2 and oulet chamber 3 from each other, to which is secured a valve seat member 5 having a valve opening 5A that communicates the inlet chamber 2 with the outlet chamber 3. The valve seat member 5 is arranged such that substantially conical valve seat faces on the side of the inlet chamber 2.

Within the inlet chamber 2 of the valve casing 1, there is arranged a valve element 6 which is opposed to the valve seat and which, in the illustrated embodiment, consists of a ball. A compression coil spring 7 is arranged to resiliently urge the valve element 6 toward the valve seat, which coil spring is accommodated inside of a cylindrical strainer element 8. Furthermore, the strainer element 8 is retained in place in which its upper end engages the outer periphery on the bottom surface of the valve seat member 5, by means of a bottom cover 9 threaded into a bottom opening which is formed in the bottom wall of the valve casing 1 coaxially with the valve seat opening 5A.

The reducing valve of the present invention further comprises a controller for controlling the operation of the valve element 6 in response to the secondary pressure of the fluid within the outlet chamber 3, which fluid is to be supplied to a desired external appliance through the reducing valve. In the illustrated embodiment, the controller is accommodated inside of a cover member 11 threadedly connected to the upper portion of the valve casing, and consists of a pressure-responsive actuating means 12 which includes a bellows 13 with its lower end tightly urged against the outer surface of the top wall of the valve casing 1 by means of the outer periphery on the lower end of the cover member 11, a spring seat member 14 which is tightly secured to the upper end or output end of the bellows 13, and a compression coil spring 15 which applies to the spring seat member 14 a balancing spring force.

In order to permit an adjustment of the balancing spring force applied by the compression coil spring 15 of the pressure-responsive actuating means 12, the upper end of the compression coil spring 15 is engaged with an adjusting sleeve 16 which is prevented from rotation relative to the cover member 11. Such a rotation-preventing arrangement can be realized by non-circular cross-section of the adjusting sleeve 16 and that part of the cover member which is adjacent to the adjusting sleeve. Furthermore, an adjusting spindle 17 is threadedly connected with the adjusting sleeve 16, which spindle is arranged to extend through a bush 18 and protrude outwardly from the top portion of the cover member 11. An adjusting knob 19 is fixedly secured to the projection end of the spindle 17, e.g. by a spring pin 20. With such an arrangement, as the adjusting knob 19 is appropriately rotated by a user manually, the adjusting sleeve 16 is vertically moved permitting a desired adjustment of the balancing spring force by the coil spring 15.

The bellows 13 and the spring seat member 14, together with the top wall of the valve casing 1, define a space forming a pressure chamber 21 to which is applied the secondary pressure of the fluid as will be explaind hereinafter. The output end of the pressure-responsive actuating means assumes an equillibrium state at a position where the force corresponding to the product of the pressure applied to the inside of the pressure chamber and the effective pressure receiving area of the bellows 13 is balanced with the spring force of the compression coil spring 15. Thus, by operably connecting the valve element 6 with the output end of the pressure-responsive actuating means 12, it becomes possible to actuate the valve element 6 in response to the secondary pressure of the fluid. To this end, the valve element 6 is integrally secured to the lower end of an actuating stem 22 which extends through the valve opening 5A and the top wall of the valve casing 1, with the upper end of the valve stem being resiliently urged against the center portion of the spring seat member 14 of the pressure-responsive actuating means 12.

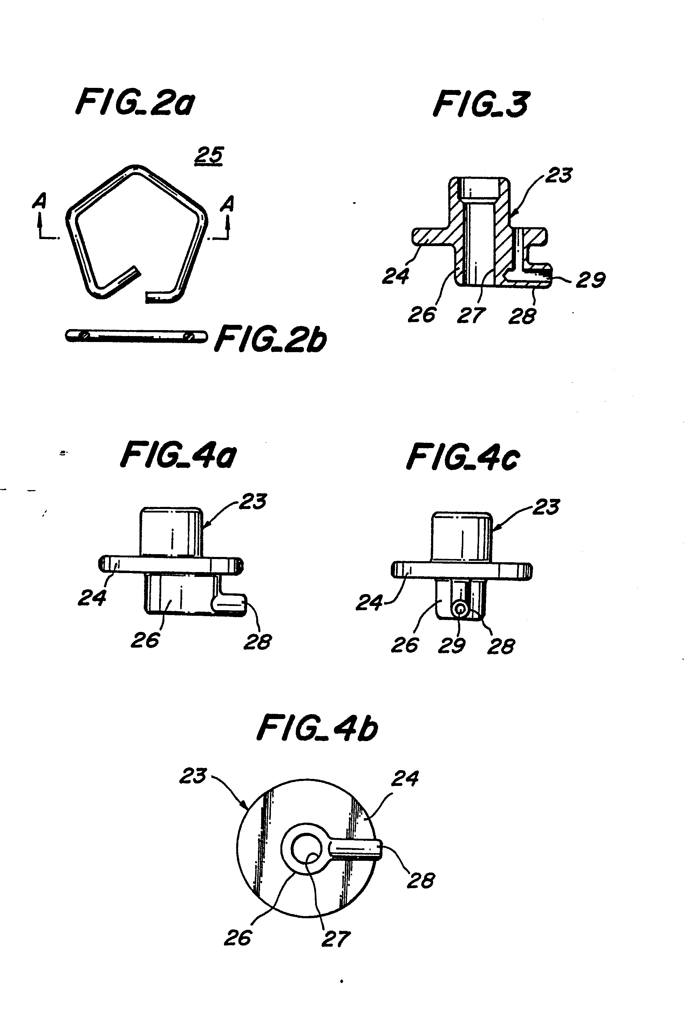

In order to guide the axial movement of the actuating stem 22 coaxially to the valve opening 5A, a guide member 23 is arranged in the top wall of the valve casing 1, the guide member having a guide bore which allows a relative sliding movement of the actuating stem 22. In the illustrated embodiment, the top wall of the valve casing 1 is formed with a top opening which is coaxial with the valve opening 5A, and the guide member 23 is provided with a flange 24 which is supported by a supporting surface along the periphery of the top opening. Furthermore, the periphery of the top opening is formed with a circumferential groove which is positioned in alignment with the upper surface of the flange 24, which groove accommodates a retainer ring 25 therein. Thus, the guide member 23 is detachably secured to the valve casing 1. In order that the guide member 23 can be secured to the valve casing 1 in a facilitated manner, the retainer ring 25 consists preferably of a hardened steel wire which is shaped into a polygonal configuration, as shown in Figs. 2a and 2b.

The guide member 23 secured to the valve casing 1 as described above is formed with a pressure-conducting passage which brings the outlet chamber 3 of the valve casing into communication with the pressure chamber 21 of the pressure responsive actuating means 12, to introduce into the pressure chamber 21 substantially exclusively the static component of the fluid pressure within the outlet chamber. In the embodiment illustrated in Figs. 1, 3 and 4a, there is provided a boss 26 which is formed integrally with the flange 24 so as to protrude into the outlet chamber 3 and toward the valve opening 5A. The boss 26 is formed with the guide bore 27 of a length sufficient to stably guide the actuating stem 22. A radial extension 28 is arranged to protrude from the axial free end of the boss 26 toward the downstream side of the fluid. The pressure-conducting passage 29 is formed as a substantially L-shaped passage which extends from the radially outer end of the extension 28 and through the boss 26 to terminate at the outer surface of the flange 24. The guide member 23 of such an arrangement serves to accurately conduct the static component of the secondary pressure to the pressure
chamber 21, and to stably guide the actuating stem 22
for the valve element 6, thereby performing a binary
function.

With the direct-operative reducing valve
according to the above-mentioned embodiment, the fluid
supplied from a high-pressure source (not shown) to the
inlet chamber 2, such as steam, is subjected to pressure
reduction in accordance with the clearance between the
valve seat of the valve seat member 5 and the valve
element 6, i.e. the opening degree of the valve, and
flows into the outlet chamber 3. The reduced pressure
is the secondary pressure of the fluid within the
outlet chamber 3, and can be set to a required level by
the above-mentioned manual adjustment through the
operation of the adjusting-knob 19. Because the valve
element 6 is operably connected with the pressure-
responsive actuating means 12 through the actuating
stem 22, and is actuated in response to the secondary
presssure, the decrease in the secondary pressure
arising from the increased consumption demand of the
fluid is detected to increase the valve opening degree
and thus to increase the supply flow rate of the fluid.
Conversely, as the consumption demand of the fluid
decreases, the increased secondary pressure is detected
to decrease the valve opening degree and thus to decrease
the supply flow rate of the fluid. The reducing valve
of the present invention does not differ from the prior art structure in that a control function is performed to continue the supply of a required amount of fluid while constantly maintaining the required level of the secondary pressure of the fluid. In the present invention, the valve element 6 is actuated in response substantially exclusively to the static component of the secondary pressure of the fluid, so that it is possible to effectively eliminate adverse influences arising from the variation of the dynamic component of the secondary pressure as a result of the variation in the consumption demand of the fluid, and to markedly suppress the tendency of incremental offset due to the increased flow rate.

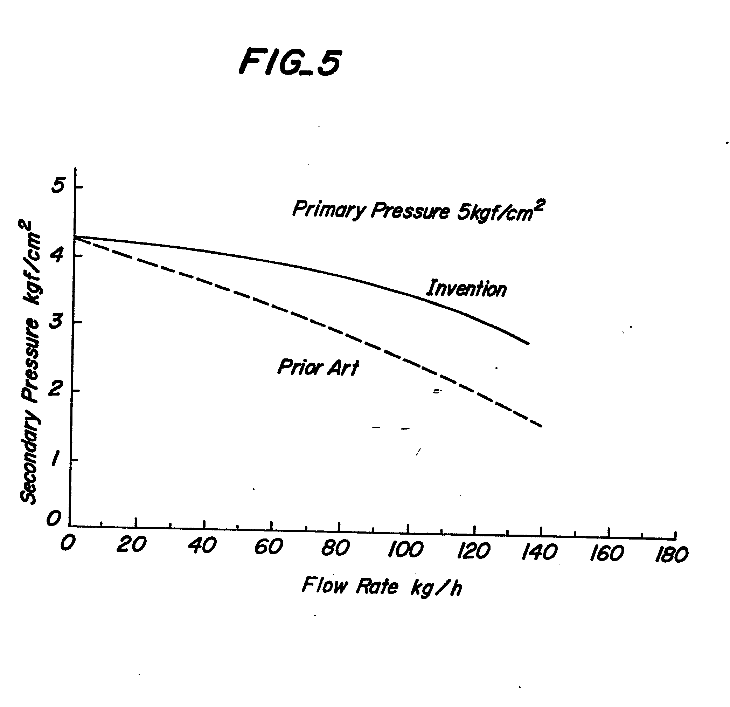

A test product of the direct-operative reducing valve in accordance with above-mentioned illustrated embodiment, for the primary pressure of 5 kgf/cm$^2$, and with the rated flow of 140 kg/h has been prepared to measure the variation in the secondary pressure as a result of the flow rate variation. The result of the measurement is shown by a solid line in Fig. 5. Furthermore, for the purpose of comparison, a reducing valve has also been prepared which is as disclosed in the above-mentioned Japanese Patent Application Laid-open Publication No. 58-29,020 and which has substantially the same specification as the test product. A similar measurement has been carried out with respect to the comparative valve, and the result of the measurement is shown by a broken line in Fig. 5. It can be appreciated that, in accordance with the present invention, the offset of the secondary pressure near the rated flow point can be reduced substantially by half, when compared with the prior art structure, and the tendency of the secondary pressure reduction in dependency of the flow rate can markedly be suppressed.

As has been fully explained hereinbefore, the present invention enables the above-mentioned object to be achieved without requiring the complication of the arrangement of the reducing valve.

## Claims

1. A direct-operative reducing valve, comprising: a valve casing (1) in which an inlet chamber (2) and an outlet chamber (3) for a fluid are defined, a partition wall (4) being arranged in the valve casing (1) to isolate said inlet chamber (2) and outlet chamber (3) from each other, said partition wall (4) having a valve seat (5) formed with a valve opening (5A) which extends from one side to the other of the partition wall; a valve element (6) arranged within the valve casing (1) in opposition to, and resiliently urged toward, the valve seat (5); and a controller (12) mounted on said valve casing (1) and adapted to control the operation of said valve element (6) in response to the outlet pressure of said fluid, said controller (12) including a pressure-responsive actuating means (13, 14, 15) defining a pressure chamber (21) to which the outlet pressure of said fluid is to be applied, an actuating stem (22) arranged coaxially with said valve opening (5A) and extending through an outer wall of said valve casing (1), for operably connecting said valve element (6) with said pressure actuating means (13, 14, 15), and a guide member (23) provided on said outer wall of said valve casing (1), for guiding the axial sliding movement of said actuating stem (22), wherein said guide member (23) is formed with a pressure-conducting passage (29) which communicates said pressure chamber (21) of said pressure-responsive actuating means (13, 14, 15) with said outlet chamber (3), and which is adapted to conduct substantially exclusively the static component of the pressure of the fluid within said outlet chamber (3) to said pressure chamber (21).

2. The reducing valve as claimed in claim 1, wherein said pressure-condcting passage (29) is formed in said guide member (23) so as to open into said outlet chamber (3) of said valve casing (1), with an orientation directed toward the downstream side of said fluid.

3. The reducing valve as claimed in claim 2, wherein said guide member (23) comprises a flange (24) which is secured to said outer wall of said valve casing (1), and a boss (26) arranged so as to protrude from said flange (24) into said outlet chamber (3) of said valve casing (1), said boss (26) being formed with a guide bore (27) for said actuating stem (22), said guide member further comprising a radial extension (28) projecting radially from an axial free end portion of said boss (26) toward the downstream side of said fluid, said pressure-conducting passage (29) being formed as a substantially L-shaped passage which extends from radially outer end of said extension, and through said boss (26) to terminate at an outer surface of said flange (24).

4. The reducing valve as claimed in any one of claims 1 to 3, wherein said guide member (23) is detachably secured to said valve casing (1).

FIG.1

FIG.2a

25

A            A

FIG.3

23

24

26    27    28

29

FIG.2b

FIG.4a

23

24

26        28

FIG.4c

23

24

26   29   28

FIG.4b

23          24

28

26      27

0199819

# FIG_5

Primary Pressure 5kgf/cm²

Secondary Pressure kgf/cm²

Invention

Prior Art

Flow Rate kg/h

aヒgo5103.9   0199819o

# INTERNATIONAL SEARCH REPORT

International Application No. PCT/JP85/00558

**I. CLASSIFICATION OF SUBJECT MATTER** (if several classification symbols apply, indicate all) ³

According to International Patent Classification (IPC) or to both National Classification and IPC

Int.Cl⁴  G05D 16/06

**II. FIELDS SEARCHED**

| Minimum Documentation Searched ⁴ | |
|---|---|
| Classification System | Classification Symbols |
| IPC | G05D 16/06 |

| Documentation Searched other than Minimum Documentation to the Extent that such Documents are Included in the Fields Searched ⁵ |
|---|
| Jitsuyo Shinan Koho          1926 - 1985 |
| Kokai Jitsuyo Shinan Koho    1972 - 1985 |

**III. DOCUMENTS CONSIDERED TO BE RELEVANT ¹⁴**

| Category* | Citation of Document, ¹⁶ with indication, where appropriate, of the relevant passages ¹⁷ | Relevant to Claim No. ¹⁸ |
|---|---|---|
| Y | JP, A, 58-29020 (Miyawaki Steam Trap Mfg. Co., Ltd.), 21 February 1983 (21. 02. 83), P.2, upper left column, line 1 to p.2 lower left column, line 5, Fig. 1 & AU, A1, 8712682 & GB, A, 2106613 & ZA, A, 825807 | 1 - 4 |
| Y | JP, U, 56-118410 (Nakakita Seisakusho Co., Ltd.), 10 September 1981 (10. 09. 81) (Family: none) | 1 - 4 |
| Y | JP, Y1, 39-23465 (Aichi Tokei Denki Kabushiki Kaisha), 14 August 1964 (14. 08. 64), Column 1, line 5 from the bottom to column 2, line 1, Fig. 1, 3 (Family: none) | 1 - 4 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search ² | Date of Mailing of this International Search Report ² |
|---|---|
| December 11, 1985 (11. 12. 85) | December 23, 1985 (23. 12. 85) |
| International Searching Authority ¹ | Signature of Authorized Officer ² |
| Japanese Patent Office | |

Form PCT/ISA/210 (second sheet) (October 1981)